(19)

Europäisches
Patentamt
European
Patent Office
Office européen
des brevets

(11) **EP 4 567 454 A1**

(12) **EUROPEAN PATENT APPLICATION**

(43) Date of publication:
**11.06.2025 Bulletin 2025/24**

(21) Application number: **24157444.1**

(22) Date of filing: **13.02.2024**

(51) International Patent Classification (IPC):
*G01S 7/292* (2006.01)      *G01S 13/02* (2006.01)
*G01S 13/10* (2006.01)

(52) Cooperative Patent Classification (CPC):
**G01S 7/2923; G01S 13/0209; G01S 13/103**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.12.2023 IN 202341083025**

(71) Applicant: **NXP B.V.**
**5656 AG Eindhoven (NL)**

(72) Inventor: **Sethuraman, Prasanna Kumar**
**5656AG Eindhoven (NL)**

(74) Representative: **Krott, Michel**
**NXP Semiconductors**
**Intellectual Property Group**
**High Tech Campus 60**
**5656 AG  Eindhoven (NL)**

Remarks:
Amended claims in accordance with Rule 137(2)
EPC.

(54)    **METHODS AND DEVICES FOR UWB-BASED DISTANCE MEASUREMENTS**

(57)    There is described a method of determining a distance between a UWB device (1) and an object of interest (6), the method comprising: -a- transmitting a pulse signal from the transmitter of the UWB device, -b- receiving a signal at the receiver of the UWB device, said signal comprising a reflection of the transmitted pulse signal caused by the object of interest, -c- determining a first distance estimate by applying a peak-based analysis to the received signal, -d- determining a first confidence value associated with the first distance estimate, -e- determining a second distance estimate by applying a phase-based analysis to the received signal, -f- determining a second confidence value associated with the second distance estimate, and -g- determining the distance between the UWB device (1) and the object of interest (6) based on the first distance estimate, the first confidence value, the second distance estimate, and the second confidence value. Furthermore, a UWB device (1) comprising corresponding processing circuitry is described.

Fig. 1

EP 4 567 454 A1

## Description

TECHNICAL FIELD

The present disclosure relates to the field of methods and devices for distance measurement. More specifically, the present disclosure relates to a method of determining a distance between a UWB device and an object of interest. Furthermore, the present disclosure relates to an UWB device for determining a distance to an object of interest.

ART BACKGROUND

A UWB modem in an electronic device can be used as an impulse radar to measure a distance to a target or object of interest and/or to track such target/object. Thereby, a short duration pulse is transmitted, and its reflection is received. This reflection is captured as change in the channel impulse response (CIR) measured by the receiver. With strong coupling between the co-located transmitter and receiver, the delay at which the reflected signal is present can be estimated only after removing the coupled path. Since the coupled path is not accurately known a-priori, distance estimation is done by either looking at the delay at which peak energy is seen within a measurement window, or by looking at the phase changes over time after accurate estimation of the coupled path. These two approaches provide two independent distance estimates, a peak-based distance estimate and a phase-based distance estimate.

There are scenarios where one approach yields correct results while the other one does not. For example, when a new target suddenly appears at a significantly different (closer or farther) distance compared to a target that is being tracked, or when the target is moving in a direction perpendicular to the boresight of the radar, the phase-based estimate will lack precision. On the other hand, the peak-based distance estimate will be unprecise in situations with a weak target, i.e., a low signal to noise ratio (SNR), or when shaking of the device causes peak variations.

Hence, relying on either one of the peak-based and phase-based distance estimates may not provide robust and reliable performance with high precision during changing conditions.

There may thus be a need for an improved way of UWB radar-based distance measurement and tracking, in particular one that is capable of providing high precision in a wide variety of situations.

SUMMARY

This need may be met by the subject matter according to the independent claims. Advantageous exemplary embodiments of the present disclosure are set forth in the dependent claims.

According to a first aspect, there is provided method of determining a distance between a UWB device and an object of interest, the UWB device comprising a transmitter and a receiver. The method comprises: (a) transmitting a pulse signal from the transmitter of the UWB device, (b) receiving a signal at the receiver of the UWB device, said signal comprising a reflection of the transmitted pulse signal caused by the object of interest, (c) determining a first distance estimate by applying a peak-based analysis to the received signal, (d) determining a first confidence value associated with the first distance estimate, (e) determining a second distance estimate by applying a phase-based analysis to the received signal, (f) determining a second confidence value associated with the second distance estimate, and (g) determining the distance between the UWB device and the object of interest based on the first distance estimate, the first confidence value, the second distance estimate, and the second confidence value.

This aspect is based on the idea that both a first (peak-based) distance estimate and a second (phase-based) distance estimate are used together with respective (first and second) confidence values associated with the (first and second) distance estimates to determine the distance between the UWB device and the object of interest that causes a reflection of the transmitted pulse signal. In other words, by relying on both the first and second distance estimates and their respective confidence values, a precise distance determination can be achieved. For example, in cases where one of the first and second distance estimates has a lower precision (and thus a lower confidence value) than the other one of the first and second distance estimates, the latter may be relied upon to precisely determine the distance, and vice versa.

In the present context, the term "peak-based analysis" may in particular denote an analysis of the received signal (also referred to as channel impulse response or CIR) which aims at detecting a certain sampling time (also referred to as a tap) at which a peak of received energy occurs.

In the present context, the term "phase-based analysis" may in particular denote an analysis of the received signal (or CIR) which aims at detecting a change in phase which corresponds to a change in distance.

In the present context, the term "confidence value" may in particular denote a value, such as a numerical value, that is indicative for a level of confidence (or expected precision) of an estimate, e.g., a distance estimate. The confidence value may e.g. be a number between 0 and 1, where 0 indicates minimum (or no) confidence, and 1 indicates maximum (or full) confidence.

According to an embodiment, the distance between the UWB device and the object of interest is determined as a weighted average of the first and second distance estimates.

In other words, the distance to the object of interest is determined by weighting the first and second distance estimates in accordance with their respective (first and second) confidence values. Thereby, when the first and second confidence values differ from each other, the resulting distance will rely more on the confident estimate and less on the unconfident estimate.

According to a further embodiment, the first distance estimate is multiplied by a first weighting factor and the second distance estimate is multiplied by a second weighting factor, wherein each of the first weighting factor and the second weighting factor are based on the first confidence value and the second confidence value.

In other words, the first and second confidence values are used to obtain first and second weighting factors that are respectively used to weight the first and second distance estimates by multiplying the latter with the corresponding weighting factor.

According to a further embodiment, the first weighting factor is calculated by dividing the first confidence value with the sum of the first and second confidence values. Furthermore, or alternatively, the second weighting factor is calculated by dividing the second confidence value with the sum of the first and second confidence values.

Mathematically, this can also be expressed as follows:

$$w_{pk} = P_{pk} / (P_{pk} + P_{ph})$$

$$w_{ph} = P_{ph} / (P_{pk} + P_{ph})$$

Here, $w_{pk}$ denotes the first (or peak-based) weighting factor, $w_{ph}$ denotes the second (or phase-based) weighting factor, $P_{pk}$ denotes the first (or peak-based) confidence value, and $P_{ph}$ denotes the second (or phase-based) confidence value.

The resulting (or fused) distance $d_f$ to the object of interest may then be calculated as $d_f = w_{pk} \cdot d_{pk} + w_{ph} \cdot d_{ph}$, where $d_{pk}$ denotes the first (or peak-based) distance estimate and $d_{ph}$ denotes the second (or phase-based) distance estimate.

According to a further embodiment, determining the first confidence value comprises determining a first SNR-value associated with the first distance estimate.

The first SNR-value may in particular be determined by measuring signal power in a window around the tap that corresponds to the first (peak-based) distance estimate and dividing this by the power measured around all other taps.

According to a further embodiment, determining the second confidence value comprises determining a second SNR-value associated with the second distance estimate.

The second SNR-value may in particular be determined by measuring signal power in a window around the tap that corresponds to the second (phase-based) distance estimate and dividing this by the power measured around all other taps.

In some cases, the taps used to determine both the first and second SNR-values may be different, in other cases they may be identical.

According to a further embodiment, the method further comprises: determining at least one quality indicator associated with at least one of the first distance estimate and the second distance estimate, and adjusting at least one of the first confidence value and the second confidence value based on the at least one quality indicator.

In other words, the at least one quality indicator may be used as a kind of secondary measure to adjust the first and/or second confidence value(s). For example, the at least one quality indicator may reflect the stability or quality of the first or second confidence value in comparison to previous measurements. Thereby, the resulting distance determination can be even more precise.

According to a further embodiment, the at least one quality indicator comprises at least one of: (a) a variance of the first distance estimate over a predetermined number of measurement windows, (b) a variance of the second distance estimate over a predetermined number of measurement windows, (c) a doppler-based movement indicator associated with the first distance estimate, (d) a doppler-based movement indicator associated with the second distance estimate, (e) a movement indicator based on a monotonicity of an unwrapped phase during a predetermined number of measurement windows, (f) a variance of a difference in unwrapped phase between successive measurement windows, (g) a variance of a difference between the first distance estimate and the second distance estimate, and (h) a variance of a radius of a circle that best fits complex points during the phase-based analysis.

Option (a) utilizes the variance of the first distance estimate over a predetermined number of measurement windows (each measurement window typically includes transmission of a number of pulse signals and reception of a corresponding number of reflections) as a quality indicator associated with the first distance estimate. In other words, if the variance of the first distance estimate over several measurement windows is high, the quality indicator may be set correspondingly low, thereby indicating that the first confidence value should be adjusted in a downward direction, i.e., to indicate a lower confidence than initially determined. On the other hand, if the variance of the first distance estimate over several measurement windows is low, the quality indicator may be set correspondingly high, thereby indicating that the first confidence value should be maintained or adjusted in an upward direction, i.e., to indicate a higher confidence than initially determined.

Option (b) is similar to option (a) discussed above, the difference being that here the variance of the second distance estimate is utilized as a quality indicator associated with the second distance estimate. That is, if the variance of the second distance estimate over several measurement windows is high, the quality indicator may be set correspondingly low, thereby indicating that the second confidence value should be adjusted in a downward direction, i.e., to indicate a lower confidence than initially determined. On the other hand, if the variance of the second distance estimate over several measurement windows is low, the quality indicator may be set correspondingly high, thereby indicating that the second confidence value should be maintained or adjusted in an upward direction, i.e., to indicate a higher confidence than initially determined.

Option (c) relies on a doppler measurement to obtain a movement indicator associated with the first (peak-based) distance estimate. The movement indicator may for example indicate whether there is a high or a low degree of movement, e.g., a velocity of movement. Furthermore, the movement indicator may for example indicate a direction of movement, in particular whether the object of interest is moving towards or away from the device. In cases where the degree of movement is high (indicating that the movement is a jump in distance), the second confidence value may be reduced since the phase-based measurement is known to be less reliable in such cases, and the first confidence value may be correspondingly increased. However, the latter is not mandatory. In other cases, where the degree of movement is low, the second confidence value may be increased since the phase-based measurement is known to be reliable in such cases.

Option (d) is similar to option (c) and merely differs therefrom in that it relies on a doppler measurement to obtain a movement indicator associated with the second (phase-based) distance estimate (instead of the first (peak-based) distance estimate used in option (c)). Apart from this, the use of the corresponding movement indicator is similar or the same as discussed above in conjunction with option (c).

According to option (e), a movement indicator is obtained on the basis of the monotonicity of the unwrapped phase during several measurement windows. If the unwrapped phase is monotonic, i.e. it is either steadily increasing or steadily decreasing, the quality of the phase-based second distance estimate may be considered high and therefore the second confidence value may be correspondingly increased. On the other hand, if the unwrapped phase is not monotonic, i.e. it is jumping up and down, the quality of the phase-based second distance estimate may be considered low and therefore the second confidence value may be correspondingly decreased.

According to option (f), the variance of the difference in unwrapped phase between successive measurement windows may be taken into account as a further quality indicator. If the variance is high, the quality of the phase-based second distance estimate may be considered low and therefore the second confidence value may be correspondingly decreased. On the other hand, if the variance is low, the quality of the phase-based second distance estimate may be considered high and therefore the second confidence value may be correspondingly increased.

According to option (g), the variance of the difference between the first (peak-based) distance estimate and the second (phase-based) distance estimate over several measurement windows is taken into consideration, preferably in conjunction with another quality indicator. More specifically, if another one of the quality indicators indicate that one of the first and second distance measurements is of low quality, the variance of the difference according to option (g) may be seen as a confirmation of such low quality. Consequently, the corresponding confidence value may be adjusted even further in order to reflect this variance. Alternatively, the variance of the difference between the first and second distance estimates may be seen as an indication that neither distance estimate should be considered as particularly confident.

Finally, option (h) provides a particular quality indicator for the second (phase-based) distance estimate. The larger the variance of the radius of the circle that best fits the complex points is over time, the lower is the quality - and hence the associated confidence - of the second (phase-based) distance estimate.

According to a further embodiment, the UWB device comprises a further receiver, the method further comprising: (a) receiving a further signal at the further receiver of the UWB device, said further signal comprising a reflection of the transmitted pulse signal caused by the object of interest, (b) determining a further first distance estimate by applying a peak-based analysis to the further received signal, (c) determining a further first confidence value associated with the further first distance estimate, (d) determining a further second distance estimate by applying a phase-based analysis to the further received signal, and (e) determining a further second confidence value associated with the further second distance estimate, (f) wherein determining the distance between the UWB device and the object of interest is further based on the further first distance estimate, the further first confidence value, the further second distance estimate, and the further second confidence value.

In other words, the further receiver also receives a signal comprising a reflection from the object of interest, and this signal is processed in the same way as the signal received by the receiver to determine further first (peak-based) and second (phase-based) distance estimates and corresponding further first and second confidence values. These further distance estimates and confidence values are then included as additional information in the determination of the distance to the object of interest.

According to a second aspect, there is provided a UWB device for determining a distance to an object of interest. The device comprises: (a) a transmitter configured to transmit a pulse signal, (b) a receiver configured to receive a signal, said signal comprising a reflection of the transmitted pulse signal caused by the object of interest, and (c) processing circuitry configured to: (d) determine a first distance estimate by applying a peak-based analysis to the received signal, (e) determine a first confidence value associated with the first distance estimate, (f) determine a second distance estimate by applying a phase-based analysis to the received signal, (g) determine a second confidence value associated with the second distance estimate, and (h) determine the distance to the object of interest based on the first distance estimate, the first confidence value, the second distance estimate, and the second confidence value.

This aspect is essentially based on the same idea as the first aspect discussed above and provides a UWB device comprising a transmitter, a receiver, and processing circuitry capable of performing the method according to the first aspect or any of the exemplary embodiments discussed above. That is, by relying on both the first and second distance estimates and their respective confidence values, a precise distance determination can be achieved. For example, in cases where one of the first and second distance estimates has a lower precision (and thus a lower confidence value) than the other one of the first and second distance estimates, the latter may be relied upon to precisely determine the distance, and vice versa.

According to a further embodiment, the processing circuitry is configured to determine the distance to the object of interest as a weighted average of the first and second distance estimates.

In other words, the distance to the object of interest is determined by weighting the first and second distance estimates in accordance with their respective (first and second) confidence values. Thereby, when the first and second confidence values differ from each other, the resulting distance will rely more on the confident estimate and less on the unconfident estimate.

According to a further embodiment, the processing circuitry is configured to multiply the first distance estimate by a first weighting factor and to multiply the second distance estimate by a second weighting factor, wherein each the first weighting factor and the second weighting factor are based on the first confidence value and the second confidence value.

In other words, the first and second confidence values are used to obtain first and second weighting factors that are respectively used to weight the first and second distance estimates by multiplying the latter with the corresponding weighting factor.

According to a further embodiment, the processing circuitry is configured to calculate the first weighting factor by dividing the first confidence value with the sum of the first and second confidence values. Furthermore, or alternatively, the processing circuitry is configured to calculate the second weighting factor by dividing the second confidence value with the sum of the first and second confidence values.

Mathematically, this can also be expressed as follows:

$$w_{pk} = P_{pk} / (P_{pk} + P_{ph})$$

$$w_{ph} = P_{ph} / (P_{pk} + P_{ph})$$

Here, $w_{pk}$ denotes the first (or peak-based) weighting factor, $w_{ph}$ denotes the second (or phase-based) weighting factor, $P_{pk}$ denotes the first (or peak-based) confidence value, and $P_{ph}$ denotes the second (or phase-based) confidence value.

The resulting (or fused) distance $d_f$ to the object of interest may then be calculated as $d_f = w_{pk} \cdot d_{pk} + w_{ph} \cdot d_{ph}$, where $d_{pk}$ denotes the first (or peak-based) distance estimate and $d_{ph}$ denotes the second (or phase-based) distance estimate.

According to a further embodiment, determining the first confidence value comprises determining a first SNR-value associated with the first distance estimate.

The first SNR-value may in particular be determined by measuring signal power in a window around the tap that corresponds to the first (peak-based) distance estimate and dividing this by the power measured around all other taps.

According to a further embodiment, determining the second confidence value comprises determining a second SNR-value associated with the second distance estimate.

The second SNR-value may in particular be determined by measuring signal power in a window around the tap that corresponds to the second (phase-based) distance estimate and dividing this by the power measured around all other taps.

In some cases, the taps used to determine both the first and second SNR-values may be different, in other cases they may be identical.

According to a further embodiment, the processing circuitry is further configured to: (a) determine at least one quality indicator associated with at least one of the first distance estimate and the second distance estimate, and (b) adjust at least one of the first confidence value and the second confidence value based on the at least one quality indicator.

In other words, the at least one quality indicator may be used as a kind of secondary measure to adjust the first and/or second confidence value(s). For example, the at least one quality indicator may reflect the stability or quality of the first or second confidence value in comparison to previous measurements. Thereby, the resulting distance determination can be even more precise.

According to a further embodiment, the at least one quality indicator comprises at least one of: (a) a variance of the first distance estimate over a predetermined number of measurement windows, (b) a variance of the second distance estimate over a predetermined number of measurement windows, (c) a doppler-based movement indicator associated with the first distance estimate, (d) a doppler-based movement indicator associated with the second distance estimate, (e) a movement indicator based on a monotonicity of an unwrapped phase during a predetermined number of measurement windows, (f) a variance of a difference in unwrapped phase between successive measurement windows, (g) a variance of a difference between the first distance estimate and the second distance estimate, and (h) a variance of a radius of a circle that best fits complex points during the phase-based analysis.

Option (a) utilizes the variance of the first distance estimate over a predetermined number of measurement windows (each measurement window typically includes transmission of a number of pulse signals and reception of a corresponding number of reflections) as a quality indicator associated with the first distance estimate. In other words, if the variance of the first distance estimate over several measurement windows is high, the quality indicator may be set correspondingly low, thereby indicating that the first confidence value should be adjusted in a downward direction, i.e., to indicate a lower confidence than initially determined. On the other hand, if the variance of the first distance estimate over several measurement windows is low, the quality indicator may be set correspondingly high, thereby indicating that the first confidence value should be maintained or adjusted in an upward direction, i.e., to indicate a higher confidence than initially determined.

Option (b) is similar to option (a) discussed above, the difference being that here the variance of the second distance estimate is utilized as a quality indicator associated with the second distance estimate. That is, if the variance of the second distance estimate over several measurement windows is high, the quality indicator may be set correspondingly low, thereby indicating that the second confidence value should be adjusted in a downward direction, i.e., to indicate a lower confidence than initially determined. On the other hand, if the variance of the second distance estimate over several measurement windows is low, the quality indicator may be set correspondingly high, thereby indicating that the second confidence value should be maintained or adjusted in an upward direction, i.e., to indicate a higher confidence than initially determined.

Option (c) relies on a doppler measurement to obtain a movement indicator associated with the first (peak-based) distance estimate. The movement indicator may for example indicate whether there is a high or a low degree of movement, e.g., a velocity of movement. Furthermore, the movement indicator may for example indicate a direction of movement, in particular whether the object of interest is moving towards or away from the device. In cases where the degree of movement is high (indicating that the movement is a jump in distance), the second confidence value may be reduced since the phase-based measurement is known to be less reliable in such cases, and the first confidence value may be correspondingly increased. However, the latter is not mandatory. In other cases, where the degree of movement is low, the second confidence value may be increased since the phase-based measurement is known to be reliable in such cases.

Option (d) is similar to option (c) and merely differs therefrom in that it relies on a doppler measurement to obtain a movement indicator associated with the second (phase-based) distance estimate (instead of the first (peak-based) distance estimate used in option (c)). Apart from this, the use of the corresponding movement indicator is similar or the same as discussed above in conjunction with option (c).

According to option (e), a movement indicator is obtained on the basis of the monotonicity of the unwrapped phase during several measurement windows. If the unwrapped phase is monotonic, i.e. it is either steadily increasing or steadily decreasing, the quality of the phase-based second distance estimate may be considered high and therefore the second confidence value may be correspondingly increased. On the other hand, if the unwrapped phase is not monotonic, i.e. it is jumping up and down, the quality of the phase-based second distance estimate may be considered low and therefore the second confidence value may be correspondingly decreased.

According to option (f), the variance of the difference in unwrapped phase between successive measurement windows may be taken into account as a further quality indicator. If the variance is high, the quality of the phase-based second distance estimate may be considered low and therefore the second confidence value may be correspondingly decreased. On the other hand, if the variance is low, the quality of the phase-based second distance estimate may be considered high and therefore the second confidence value may be correspondingly increased.

According to option (g), the variance of the difference between the first (peak-based) distance estimate and the second (phase-based) distance estimate over several measurement windows is taken into consideration, preferably in conjunction with another quality indicator. More specifically, if another one of the quality indicators indicate that one of the first and second distance measurements is of low quality, the variance of the difference according to option (g) may be seen as a confirmation of such low quality. Consequently, the corresponding confidence value may be adjusted even further in order to reflect this variance. Alternatively, the variance of the difference between the first and second distance estimates

may be seen as an indication that neither distance estimate should be considered as particularly confident.

**[0063]** Finally, option (h) provides a particular quality indicator for the second (phase-based) distance estimate. The larger the variance of the radius of the circle that best fits the complex points is over time, the lower is the quality - and hence the associated confidence - of the second (phase-based) distance estimate.

**[0064]** According to a further embodiment, the device comprises a further receiver configured to receive a further signal, said further signal comprising a reflection of the transmitted pulse signal caused by the object of interest, and the processing circuitry is further configured to: (a) determine a further first distance estimate by applying a peak-based analysis to the further received signal, (b) determine a further first confidence value associated with the further first distance estimate, (c) determine a further second distance estimate by applying a phase-based analysis to the further received signal, (d) determine a further second confidence value associated with the further second distance estimate, and (e) determine the distance to the object of interest based further on the further first distance estimate, the further first confidence value, the further second distance estimate, and the further second confidence value.

**[0065]** In other words, the further receiver also receives a signal comprising a reflection from the object of interest, and this signal is processed in the same way as the signal received by the receiver to determine further first (peak-based) and second (phase-based) distance estimates and corresponding further first and second confidence values. These further distance estimates and confidence values are then included as additional information in the determination of the distance to the object of interest.

**[0066]** It should be noted that exemplary embodiments have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular a combination of features of the method type claims and features of the apparatus type claims, is also disclosed with this document.

**[0067]** The aspects defined above and further aspects of the present disclosure will be apparent from the examples of embodiment to be described hereinafter and are explained with reference to the examples of embodiment. Aspects of the present disclosure will be described in more detail hereinafter with reference to examples of embodiment to which the present disclosure is, however, not limited.

## BRIEF DESCRIPTION OF THE DRAWING

**[0068]**

Figure 1 shows a block diagram of a UWB device according to an exemplary embodiment of the present disclosure.

Figure 2 shows exemplary signals transmitted and received by the UWB device shown in Figure 1.

Figure 3 shows an exemplary channel impulse response (CIR) obtained after processing in an UWB device according to an exemplary embodiment of the present disclosure.

Figure 4 shows a phasor representation of an exemplary CIR value in accordance with an exemplary embodiment of the present disclosure.

Figure 5 illustrates an SNR-based determination of a confidence value in accordance with an exemplary embodiment of the present disclosure.

Figure 6 shows confidence values and weighting factors determined during operation of a UWB device according to an exemplary embodiment of the present disclosure.

Figure 7 shows distance estimates determined during operation of a UWB device according to an exemplary embodiment of the present disclosure.

Figure 8 shows a flow diagram of a method of determining a distance between a UWB device and an object of interest in accordance with an exemplary embodiment of the present disclosure.

Figure 9 shows a partial block diagram of a UWB device comprising a plurality of receivers according to a further exemplary embodiment.

## DETAILED DESCRIPTION

**[0069]** The illustration in the drawing is schematic. It is noted that in different figures, similar or identical elements are provided with the same reference signs or with reference signs, which differ only within the first digit.

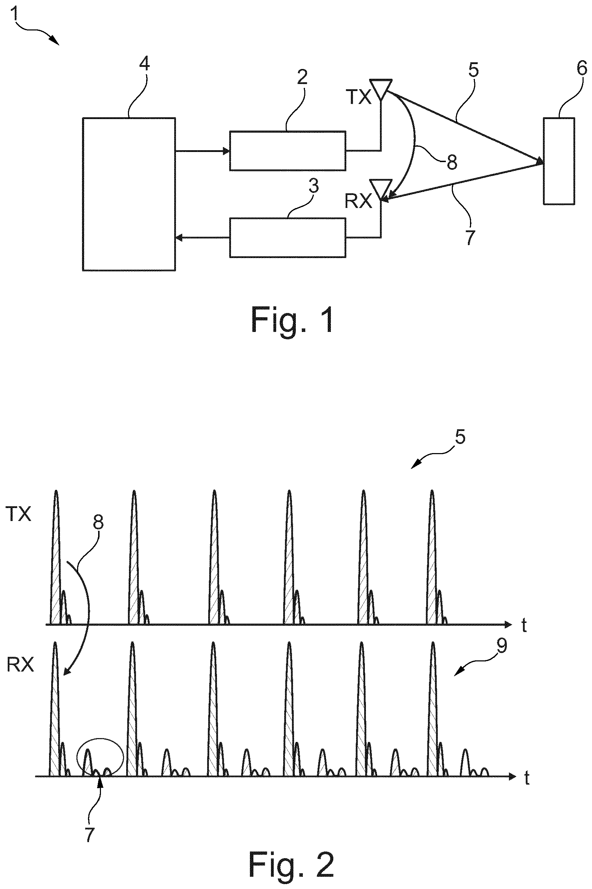

**[0070]** Figure 1 shows a block diagram of a UWB device 1 according to an exemplary embodiment of the present disclosure. The device 1 comprises a transmitter (TX) 2 coupled to a transmitter antenna, a receiver (RX) 3 coupled to a receiver antenna, and processing circuitry 4 coupled to the transmitter 2 and receiver 3. In operation, the transmitter transmits a pulse signal 5 towards an object of interest or target 6, which causes a reflection 7 to propagate back towards

the device 1. Furthermore, there is a direct coupling path 8 between the transmitter 2 and receiver 3. Therefore, the signal received at the receiver 3 comprises both a signal part received via the direct coupling path 8 and a signal part corresponding to the reflection 7. This is shown in Figure 2, where the transmitted pulse signal 5 is shown as a function of time in the upper half (labeled TX), while the received signal 9 is shown in the lower half (labeled RX). As can be seen, the received signal 9 comprises directly coupled pulses corresponding to the pulsed signal 5. Furthermore, the reflected signal 7, with some delay and significantly lower amplitude, is shown in the encircled portion of the lower plot.

Typically, the transmitter 2 will send a series of pulses with a constant separation in time during a measurement window. The corresponding signal from the receiver 3 will be processed by processing circuitry 4 in order to determine the distance between the device 1 and the target 6. This processing involves computation of a channel impulse response (CIR) by coherent integration of the transmitted pulses. More specifically, the CIR can be modelled as:

$$h(t, \tau) = h^{(s)}(\tau) + \rho e^{j2\pi f_d t} p(\tau - \tau_{tgt})$$

The first term $h^{(s)}(\tau)$ is the coupled path that is assumed to not change over time (static), and the second term is the target reflection that varies depending on the doppler frequency $f_d$ of the target at distance $d = (\tau_{tgt} \cdot c)/2$. The reflected signal amplitude is $\rho$ and the transmitted pulse is $p(\tau)$.

In some embodiments, the device 1 may comprise at least one further receiver. In such cases, the signals received by each of the resulting plurality of receivers are processed in the same way as the signal received by the receiver 3 shown in Figure 1. For ease of description, the following discussion will refer to only one receiver. However, the skilled person will realize that the present disclosure is equally valid for devices having any number of receivers. Having more receivers will provide more data and thereby even better results.

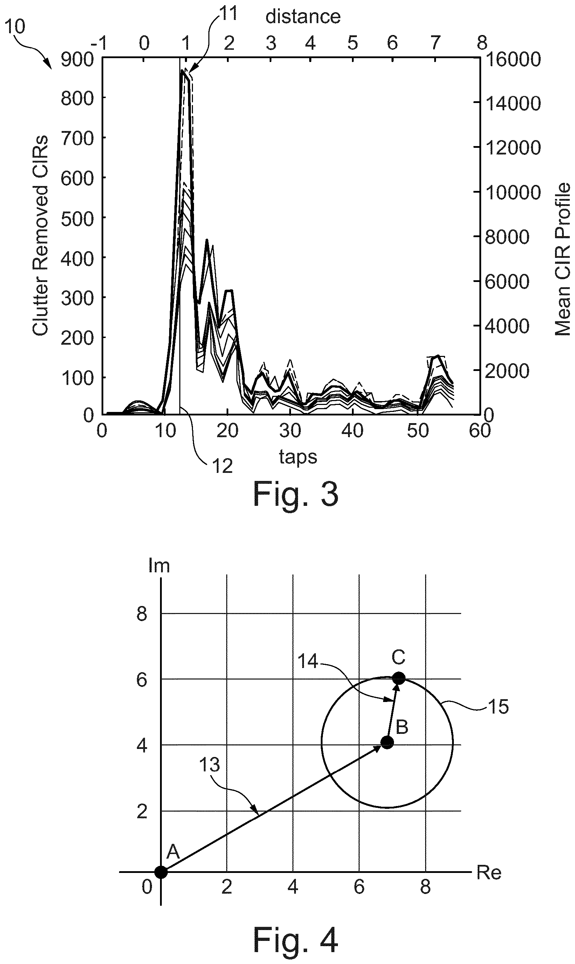

Figure 3 shows a plot 10 of an exemplary CIR obtained after processing in an UWB device according to an exemplary embodiment of the present disclosure, e.g., device 1 shown in Figure 1 and discussed above. At least a part of the processing has removed the part of the CIR that corresponds to the direct coupling 8 between the transmitter 2 and receiver 3. As shown, the CIR 10 shows a significant peak 11 at a time or tap 12, corresponding to a peak-based distance estimate, also referred to as first distance estimate herein. The peak 11 may preferably be detected utilizing suitable algorithms, such as CFAR (constant false alarm rate).

Figure 4 shows a phasor representation of an exemplary CIR value at a given tap. As shown, the phasor representation is composed of a static phasor 13 corresponding to the directly coupled path 8, and a moving phasor 14 corresponding to the reflection 7 from the object of interest 6. Once the static phasor 13 has been correctly estimated, the target movement can be measured by accumulating the phase changes over time, corresponding to movement of the endpoint C on the circle 15. Thereby, a phase-based distance estimate, also referred to as second distance estimate herein, is obtained.

According to the present disclosure, these two distance estimates, i.e., the first (peak-based) distance estimate and the second (phase-based) distance estimate may be combined in order to obtain a more precise distance measurement, in particular one that remains precise under varying conditions, and which therefore exhibits an improved level of robustness in comparison to devices utilizing only of the estimates. More specifically, as will be discussed in the following, this is done by determining a first confidence value associated with the first (peak-based) distance estimate and a second confidence value associated with the second (phase-based) distance estimate. The distance between the device 1 and the target 6 is then determined on the basis of the first and second distance estimates and the first and second confidence values. In particular, the confidence values may be used to determine, at any given time, how much to rely on each of the two distance estimates. This may in particular involve calculation of a weighted average, wherein the weights applied to each of the first and second distance estimates are calculated from the first and second confidence values.

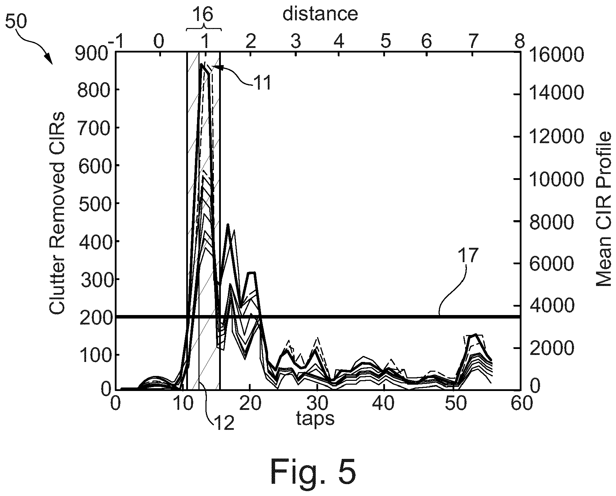

Figure 5 illustrates an SNR-based determination of a confidence value in accordance with an exemplary embodiment of the present disclosure. More specifically, the plot 50 shows essentially the same CIR as shown in Figure 3, in particular having a peak 11 at time/tap 12. Furthermore, the plot 50 shows that a window 16 has been arranged around tap 12 and thereby encloses the peak 11. By calculating the ratio between the signal energy within window 16 and the remaining CIR, e.g., the mean value 17 over the remaining taps, a signal-to-noise ratio (SNR) which can be used as a confidence value is obtained. It should be noted that this technique can be used for both the first and second distance estimates to obtain corresponding SNR-based first and second confidence values. In the phase-based case, the window 16 is arranged in dependency on the tap that corresponds to the phase-based distance estimate. In further embodiments, other techniques may be used to obtain corresponding SNR values.

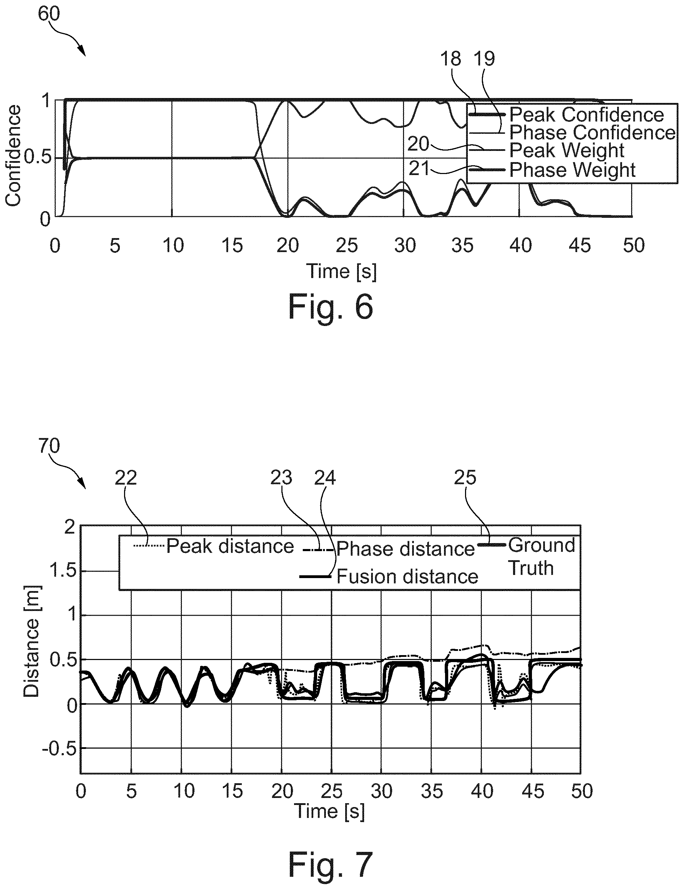

Figure 6 shows a plot 60 of confidence values and corresponding weighting factors determined during operation of a UWB device according to an exemplary embodiment of the present disclosure. More specifically, the plot 60 shows first confidence values 18 (labeled "Peak Confidence") for the peak-based distance estimate and second confidence values 19 (labeled "Phase Confidence") for the phase-based distance estimate. Furthermore, the plot 60 shows a first weighting factor 20 (labeled "Peak Weight") and a second weighting factor 21 (labeled "Phase Weight"). More specifically, the first and second weighting factors 20, 21 are calculated as follows:

$$w_{pk} = P_{pk} / (P_{pk} + P_{ph})$$

$$w_{ph} = P_{ph} / (P_{pk} + P_{ph})$$

Here, $w_{pk}$ denotes the first (or peak-based) weighting factor 20 ("Peak Weight" in the plot 60), $w_{ph}$ denotes the second (or phase-based) weighting factor 21 ("Phase weight" in the plot 60), $P_{pk}$ denotes the first (or peak-based) confidence value 18, and $P_{ph}$ denotes the second (or phase-based) confidence value 19.

As shown, in cases where one of the two confidence values 18, 19 is low, the other one is usually high, and situations where both confidence values are very low do not occur.

Figure 7 shows distance estimates determined during operation of the UWB device 1 as well as resulting (or fused) distance and the true distance (Ground Truth) for comparison. More specifically, a first (peak-based) distance estimate 22 labeled "Peak distance" and a second (phase-based) distance estimate 23 labeled "Phase distance" are shown. Furthermore, a resulting distance 24 (labeled "Fusion distance") is shown. The resulting distance 24 is obtained by combining or fusing the first and second distance estimates 22, 23 utilizing the weighting factors 20, 21 discussed above and shown in Figure 6. More specifically, the resulting (or fused) distance $d_f$ 24 to the object of interest is calculated as a weighted average:

$$d_f = w_{pk} \cdot d_{pk} + w_{ph} \cdot d_{ph}$$

Here, $d_{pk}$ denotes the first (or peak-based) distance estimate 22 and $d_{ph}$ denotes the second (or phase-based) distance estimate 23.

The plot 70 in Figure 7 also shows the actual distance (or Ground Truth) 25 for comparison. As can be seen, the resulting/fused distance 24 is generally very close to the actual distance 25 with only some minor and short-time deviations occurring when the phase-based second distance estimate has low confidence.

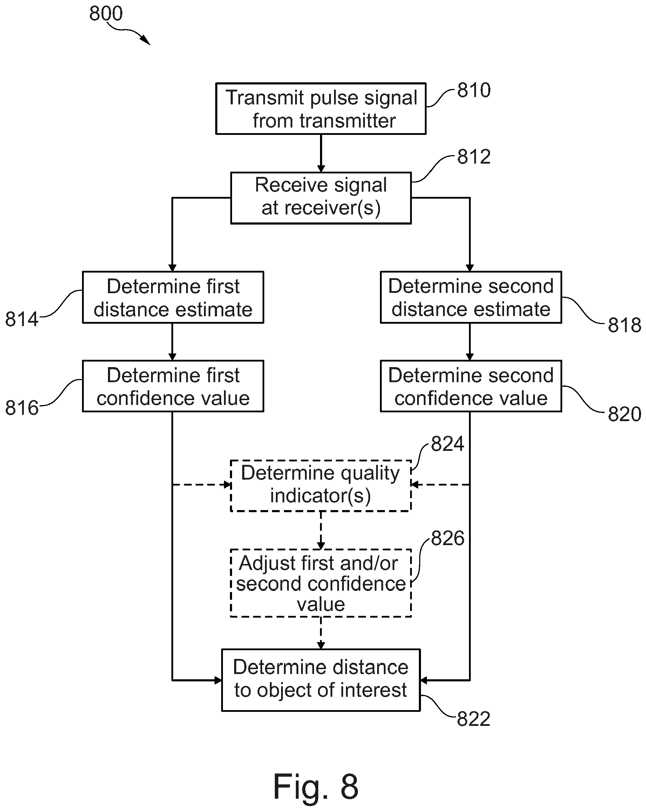

Figure 8 shows a flow diagram 800 of a method of determining a distance between a UWB device, such as device 1 in Figure 1, and an object of interest, such as target 6 in Figure 1, in accordance with an exemplary embodiment of the present disclosure.

At 810, a pulse signal 5 is transmitted from transmitter 2 of the device 1.

At 812, a signal comprising a reflection from the object of interest 6 is received at the receiver 3 (or at each receiver if the device comprises more than one receiver).

Then, the received signal is subjected to processing.

More specifically, at 814, a first distance estimate is determined by applying a peak-based analysis to the received signal.

At 816, a first confidence value is determined. The first confidence value is associated with the first (peak-based) distance estimate and indicative of the confidence of said first distance estimate.

Thereafter, or in parallel with processing operations 814 and 816, a second distance estimate is determined at 818 by applying a phase-based analysis to the received signal.

At 820, a second confidence value is determined. The second confidence value is associated with the second (phase-based) distance estimate and indicative of the confidence of said second distance estimate.

At 822, a resulting distance to the object of interest is determined on the basis of the first and second distance estimates and the associated first and second confidence values. For example, the confidence values may be used to calculate weighting factors, and the resulting distance may then be calculated as a weighted average of the first and second distance estimates.

Optionally, one or more quality indicators may be determined at 824 and then used at 826 to adjust the first confidence value and/or the second confidence value prior to determining the resulting distance to the object of interest at 822. More specifically, the quality indicator(s) may be used as a secondary measure to strengthen or weaken the confidence of the first and/or second distance estimate.

Examples of such quality indicators include the following: (a) a variance of the first distance estimate over a predetermined number of measurement windows, (b) a variance of the second distance estimate over a predetermined number of measurement windows, (c) a doppler-based movement indicator associated with the first distance estimate, (d) a doppler-based movement indicator associated with the second distance estimate, (e) a movement indicator based on a monotonicity of an unwrapped phase during a predetermined number of measurement windows, (f) a variance of a difference in unwrapped phase between successive measurement windows, (g) a variance of a difference between the first distance estimate and the second distance estimate, and (h) a variance of a radius of a circle that best fits complex points during the phase-based analysis.

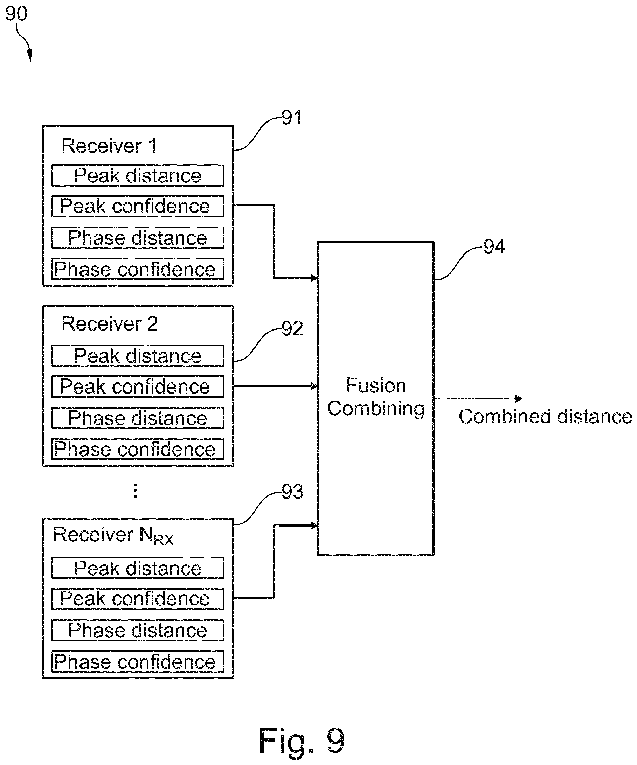

Figure 9 shows a partial block diagram 90 of a UWB device comprising a plurality of receivers according to a further exemplary embodiment. More specifically, the UWB device comprises a total of $N_{RX}$ receivers 91, 92, 93. The receivers 91, 92, 93 are located close to each other within the UWB device and coupled to processing unit 94. Each receiver 91, 92, 93 obtains a first (peak-based) distance estimate "Peak distance", a first confidence value "Peak confidence", a second (phase-based) distance estimate "Phase distance", and a second confidence value "Phase confidence", and provides these estimates and confidence values to the processing unit 94. The processing unit fuses or combines these values to obtain a resulting distance "Combined distance" by weighting the distance estimates in accordance with the confidence values in a similar manner as described above in conjunction with a single receiver. More specifically, the corresponding calculations comprise calculating first (peak-based) and second (phase-based) weighting factors for each receiver 91, 92, 93 as follows:

$$w_{pk}(rx_i) = P_{pk}(rx_i)/\sum_{rx_i} P_{pk}(rx_i) + P_{ph}(rx_i)$$

$$w_{ph}(rx_i) = P_{ph}(rx_i)/\sum_{rx_i} P_{pk}(rx_i) + P_{ph}(rx_i)$$

Here, $w_{pk}(rx_i)$ denotes the first (peak-based) weighting factor and $w_{ph}(rx_i)$ denotes the second (phase-based) weighting factor for receiver $rxi$, Similarly, $P_{pk}(rx_i)$ denotes the first (peak-based) confidence value and $P_{ph}(rx_i)$ denotes the second (phase-based) confidence value for receiver $rxi$.

The combined distance $d_f$ is then calculated as

$$d_f = \sum_{rx_i} w_{pk}(rx_i) \cdot d_{pk}(rx_i) + w_{ph}(rx_i) \cdot d_{ph}(rx_i) \,,$$

where $d_{pk}(rx_i)$ denotes the first (peak-based) distance estimate from receiver $rx_i$ and $d_{ph}(rx_i)$ denotes the second (phase-based) distance estimate from receiver $rx_i$.

It is noted that, unless otherwise indicated, the use of terms such as "upper", "lower", "left", and "right" refers solely to the orientation of the corresponding drawing.

It is noted that the term "comprising" does not exclude other elements or steps and that the use of the articles "a" or "an" does not exclude a plurality. Also, elements described in association with different embodiments may be combined. It should also be noted that reference signs in the claims should not be construed as limiting the scope of the claims.

**Claims**

1. A method of determining a distance between a UWB device and an object of interest, wherein the UWB device comprises a transmitter and a receiver, the method comprising:

   transmitting a pulse signal from the transmitter of the UWB device,
   receiving a signal at the receiver of the UWB device, said signal comprising a reflection of the transmitted pulse signal caused by the object of interest,
   determining a first distance estimate by applying a peak-based analysis to the received signal,
   determining a first confidence value associated with the first distance estimate,
   determining a second distance estimate by applying a phase-based analysis to the received signal,
   determining a second confidence value associated with the second distance estimate, and
   determining the distance between the UWB device and the object of interest based on the first distance estimate, the first confidence value, the second distance estimate, and the second confidence value.

2. The method according to claim 1, wherein the distance between the UWB device and the object of interest is determined as a weighted average of the first and second distance estimates.

3. The method according to claim 2, wherein the first distance estimate is multiplied by a first weighting factor and the second distance estimate is multiplied by a second weighting factor, wherein each of the first weighting factor and the second weighting factor are based on the first confidence value and the second confidence value.

4. The method according to claim 3, wherein the first weighting factor is calculated by dividing the first confidence value with the sum of the first and second confidence values, and wherein the second weighting factor is calculated by dividing the second confidence value with the sum of the first and second confidence values.

5. The method according to anyone of claims 1 to 4, wherein determining the first confidence value comprises determining a first SNR-value associated with the first distance estimate, and/or wherein determining the second confidence value comprises determining a second SNR-value associated with the second distance estimate.

6. The method according to anyone of claims 1 to 5, further comprising:

   determining at least one quality indicator associated with at least one of the first distance estimate and the second distance estimate, and
   adjusting at least one of the first confidence value and the second confidence value based on the at least one quality indicator.

7. The method according to claim 6, wherein the at least one quality indicator comprises at least one of:

   a variance of the first distance estimate over a predetermined number of measurement windows,
   a variance of the second distance estimate over a predetermined number of measurement windows,
   a doppler-based movement indicator associated with the first distance estimate,
   a doppler-based movement indicator associated with the second distance estimate,
   a movement indicator based on a monotonicity of an unwrapped phase during a predetermined number of measurement windows,
   a variance of a difference in unwrapped phase between successive measurement windows,
   a variance of a difference between the first distance estimate and the second distance estimate, and
   a variance of a radius of a circle that best fits complex points during the phase-based analysis.

8. The method according to any one of claims 1 to 7, wherein the USB device comprises a further receiver, the method further comprising:

   receiving a further signal at the further receiver of the UWB device, said further signal comprising a reflection of the transmitted pulse signal caused by the object of interest,
   determining a further first distance estimate by applying a peak-based analysis to the further received signal,
   determining a further first confidence value associated with the further first distance estimate,
   determining a further second distance estimate by applying a phase-based analysis to the further received signal, and
   determining a further second confidence value associated with the further second distance estimate,
   wherein determining the distance between the UWB device and the object of interest is further based on the further first distance estimate, the further first confidence value, the further second distance estimate, and the further second confidence value.

9. A UWB device for determining a distance to an object of interest, the device comprising:

   a transmitter configured to transmit a pulse signal,
   a receiver configured to receive a signal, said signal comprising a reflection of the transmitted pulse signal caused by the object of interest, and
   processing circuitry configured to:

   determine a first distance estimate by applying a peak-based analysis to the received signal,
   determine a first confidence value associated with the first distance estimate,
   determine a second distance estimate by applying a phase-based analysis to the received signal,
   determine a second confidence value associated with the second distance estimate, and
   determine the distance to the object of interest based on the first distance estimate, the first confidence value, the second distance estimate, and the second confidence value.

10. The device according to claim 9, wherein the processing circuitry is configured to determine the distance to the object of interest as a weighted average of the first and second distance estimates.

11. The device according to claim 10, wherein the processing circuitry is configured to multiply the first distance estimate by a first weighting factor and to multiply the second distance estimate by a second weighting factor, wherein each the first weighting factor and the second weighting factor are based on the first confidence value and the second confidence value, wherein the processing circuitry is in particular configured to calculate the first weighting factor by dividing the first confidence value with the sum of the first and second confidence values, and wherein the processing circuitry is in particular configured to calculate the second weighting factor by dividing the second confidence value with the sum of the first and second confidence values.

12. The device according to any one of claims 9 to 11, wherein determining the first confidence value comprises determining a first SNR-value associated with the first distance estimate, and/or wherein determining the second confidence value comprises determining a second SNR-value associated with the second distance estimate.

13. The device according to any one of claims 9 to 12, wherein the processing circuitry is further configured to:

> determine at least one quality indicator associated with at least one of the first distance estimate and the second distance estimate, and
> adjust at least one of the first confidence value and the second confidence value based on the at least one quality indicator.

14. The device according to claim 13, wherein the at least one quality indicator comprises at least one of:

> a variance of the first distance estimate over a predetermined number of measurement windows,
> a variance of the second distance estimate over a predetermined number of measurement windows,
> a doppler-based movement indicator associated with the first distance estimate,
> a doppler-based movement indicator associated with the second distance estimate,
> a movement indicator based on a monotonicity of an unwrapped phase during a predetermined number of measurement windows,
> a variance of a difference in unwrapped phase between successive measurement windows,
> a variance of a difference between the first distance estimate and the second distance estimate, and
> a variance of a radius of a circle that best fits complex points during the phase-based analysis.

15. The device according to any one of claims 9 to 14, comprising a further receiver configured to receive a further signal, said further signal comprising a reflection of the transmitted pulse signal caused by the object of interest, wherein the processing circuitry is further configured to:

> determine a further first distance estimate by applying a peak-based analysis to the further received signal,
> determine a further first confidence value associated with the further first distance estimate,
> determine a further second distance estimate by applying a phase-based analysis to the further received signal,
> determine a further second confidence value associated with the further second distance estimate, and
> determine the distance to the object of interest based further on the further first distance estimate, the further first confidence value, the further second distance estimate, and the further second confidence value.

**Amended claims in accordance with Rule 137(2) EPC.**

1. A method (800) of determining a distance between a UWB device (1) and an object of interest (6), wherein the UWB device comprises a transmitter (2) and a receiver (3), the method comprising:

> transmitting (810) a pulse signal (5) from the transmitter (2) of the UWB device (1),
> receiving (812) a signal at the receiver (3) of the UWB device (1), said signal comprising a reflection (7) of the transmitted pulse signal (5) caused by the object of interest (6),
> determining (814) a first distance estimate by applying a peak-based analysis to the received signal,
> determining (816) a first confidence value associated with the first distance estimate,
> determining (818) a second distance estimate by applying a phase-based analysis to the received signal,
> determining (820) a second confidence value associated with the second distance estimate, and
> determining (822) the distance between the UWB device (1) and the object of interest (6) based on the first distance estimate, the first confidence value, the second distance estimate, and the second confidence value, wherein the distance between the UWB device (1) and the object of interest (6) is determined as a weighted average of the first and second distance estimates, wherein the first distance estimate is multiplied by a first weighting factor and the second distance estimate is multiplied by a second weighting factor, and wherein the first weighting factor is calculated by dividing the first confidence value with the sum of the first and second confidence values, and wherein the second weighting factor is calculated by dividing the second confidence value with the sum of the first and second confidence values.

2. The method according to claim 1, wherein determining the first confidence value comprises determining a first SNR-value associated with the first distance estimate, and/or wherein determining the second confidence value comprises determining a second SNR-value associated with the second distance estimate.

3. The method according to anyone of claims 1 to 2, further comprising:

   determining (824) at least one quality indicator associated with at least one of the first distance estimate and the second distance estimate, and
   adjusting (826) at least one of the first confidence value and the second confidence value based on the at least one quality indicator.

4. The method according to claim 3, wherein the at least one quality indicator comprises at least one of:

   a variance of the first distance estimate over a predetermined number of measurement windows,
   a variance of the second distance estimate over a predetermined number of measurement windows,
   a doppler-based movement indicator associated with the first distance estimate,
   a doppler-based movement indicator associated with the second distance estimate,
   a movement indicator based on a monotonicity of an unwrapped phase during a predetermined number of measurement windows,
   a variance of a difference in unwrapped phase between successive measurement windows,
   a variance of a difference between the first distance estimate and the second distance estimate, and
   a variance of a radius of a circle that best fits complex points during the phase-based analysis.

5. The method according to any one of claims 1 to 4, wherein the UWB device (1) comprises a further receiver, the method further comprising:

   receiving a further signal at the further receiver of the UWB device, said further signal comprising a reflection of the transmitted pulse signal caused by the object of interest (6),
   determining a further first distance estimate by applying a peak-based analysis to the further received signal,
   determining a further first confidence value associated with the further first distance estimate,
   determining a further second distance estimate by applying a phase-based analysis to the further received signal, and
   determining a further second confidence value associated with the further second distance estimate,
   wherein determining the distance between the UWB device (1) and the object of interest (6) is further based on the further first distance estimate, the further first confidence value, the further second distance estimate, and the further second confidence value.

6. A UWB device (1) for determining a distance to an object of interest (6), the device comprising:

   a transmitter (2) configured to transmit a pulse signal (5),
   a receiver (3) configured to receive a signal, said signal comprising a reflection (7) of the transmitted pulse signal (5) caused by the object of interest (6), and
   processing circuitry (4) configured to:

   determine a first distance estimate by applying a peak-based analysis to the received signal,
   determine a first confidence value associated with the first distance estimate,
   determine a second distance estimate by applying a phase-based analysis to the received signal,
   determine a second confidence value associated with the second distance estimate, and
   determine the distance to the object of interest (6) based on the first distance estimate, the first confidence value, the second distance estimate, and the second confidence value,

wherein the processing circuitry (4) is configured to determine the distance to the object of interest as a weighted average of the first and second distance estimates, wherein the processing circuitry (4) is configured to multiply the first distance estimate by a first weighting factor and to multiply the second distance estimate by a second weighting factor, wherein the processing circuitry (4) is configured to calculate the first weighting factor by dividing the first confidence value with the sum of the first and second confidence values, and wherein the processing circuitry (4) is configured to calculate the second weighting factor by dividing the second confidence value with the sum of the first and second confidence values.

7. The device (1) according to claim 6, wherein determining the first confidence value comprises determining a first SNR-value associated with the first distance estimate, and/or wherein determining the second confidence value comprises determining a second SNR-value associated with the second distance estimate.

8. The device (1) according to any one of claims 6 to 7, wherein the processing circuitry (4) is further configured to:

determine at least one quality indicator associated with at least one of the first distance estimate and the second distance estimate, and
adjust at least one of the first confidence value and the second confidence value based on the at least one quality indicator.

9. The device (1) according to claim 8, wherein the at least one quality indicator comprises at least one of:

a variance of the first distance estimate over a predetermined number of measurement windows,
a variance of the second distance estimate over a predetermined number of measurement windows,
a doppler-based movement indicator associated with the first distance estimate,
a doppler-based movement indicator associated with the second distance estimate,
a movement indicator based on a monotonicity of an unwrapped phase during a predetermined number of measurement windows,
a variance of a difference in unwrapped phase between successive measurement windows,
a variance of a difference between the first distance estimate and the second distance estimate, and
a variance of a radius of a circle that best fits complex points during the phase-based analysis.

10. The device (1) according to any one of claims 6 to 9, comprising a further receiver configured to receive a further signal, said further signal comprising a reflection of the transmitted pulse signal caused by the object of interest (6), wherein the processing circuitry (4) is further configured to:

determine a further first distance estimate by applying a peak-based analysis to the further received signal,
determine a further first confidence value associated with the further first distance estimate,
determine a further second distance estimate by applying a phase-based analysis to the further received signal,
determine a further second confidence value associated with the further second distance estimate, and
determine the distance to the object of interest (6) based further on the further first distance estimate, the further first confidence value, the further second distance estimate, and the further second confidence value.

Fig. 1

Fig. 2

Fig. 3

Fig. 4

Fig. 5

60

18  19

20

21

Peak Confidence
Phase Confidence
Peak Weight
Phase Weight

Confidence

1

0.5

0

0    5    10   15   20   25   30   35   40   45   50
Time [s]

Fig. 6

70

22          23   24        25

Peak distance ---- Phase distance — Ground
Truth
Fusion distance

Distance [m]

2

1.5

1

0.5

0

-0.5

0    5    10   15   20   25   30   35   40   45   50
Time [s]

Fig. 7

Fig. 8

90

Fig. 9

| | Europäisches Patentamt<br>European Patent Office<br>Office européen des brevets | **EUROPEAN SEARCH REPORT** | **Application Number**<br>EP 24 15 7444 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | US 2023/246882 A1 (NGUYEN HOANG VIET [US] ET AL) 3 August 2023 (2023-08-03)<br>* abstract *<br>* paragraphs [0004], [0005]; claims 1,2,4-9,11-14 *<br>* paragraphs [0048] - [0059]; figures 3,5 *<br>* paragraphs [0093] - [0101]; figure 11 *<br>----- | 1-3,5,<br>8-12,15 | INV.<br>G01S7/292<br>G01S13/02<br>G01S13/10 |
| | | | **TECHNICAL FIELDS<br>SEARCHED (IPC)**<br><br>G01S |

The present search report has been drawn up for all claims

| Place of search | Date of completion of the search | Examiner |
|---|---|---|
| Munich | 3 July 2024 | van Norel, Jan |

EPO FORM 1503 03.82 (P04C01)

## ANNEX TO THE EUROPEAN SEARCH REPORT
## ON EUROPEAN PATENT APPLICATION NO.

EP 24 15 7444

This annex lists the patent family members relating to the patent documents cited in  the above-mentioned European search report.
The members are as contained in the European Patent Office EDP file on
The European Patent Office is in no way liable for these particulars which are merely given for the purpose of information.

03-07-2024

| Patent document cited in search report | Publication date | Patent family member(s) | Publication date |
|---|---|---|---|
| US 2023246882 A1 | 03-08-2023 | NONE | |

EPO FORM P0459

For more details about this annex : see Official Journal of the European Patent Office, No. 12/82